# EUROPÄISCHE PATENTSCHRIFT

(11) **EP 3 220 132 B1**
(45) Veröffentlichungstag und Bekanntmachung des Hinweises auf die Patenterteilung: **08.05.2019**
(21) Anmeldenummer: 17000417.0
(22) Anmeldetag: 15.03.2017
(51) Int. Cl.: G01N 21/3504, G01N 21/03, G01N 21/09

(54) **IN-SITU-GASMESSSYSTEM FÜR GASREAKTOREN MIT KRITISCHEN UMGEBUNGEN**
IN-SITU GAS MEASURING SYSTEM FOR GAS REACTORS WITH CRITICAL ENVIRONMENTS
SYSTÈME DE MESURE DE GAZ IN SITU POUR RÉACTEURS À GAZ DANS DES ENVIRONNEMENTS CRITIQUES

(30) Priorität: 18.03.2016 DE 102016003285
(43) Veröffentlichungstag der Anmeldung: 20.09.2017
(73) Patentinhaber: Dräger Safety AG & Co. KGaA, 23560 Lübeck (DE)
(72) Erfinder: Schmidt-Kaeding, Patrick, 23560 Lübeck (DE)
(74) Vertreter: Heinemeyer, Karsten

(56) Entgegenhaltungen:
- EP-A2- 0 423 488
- WO-A2-2009/155459
- CN-A- 102 062 726
- DE-A1- 19 650 302
- DE-A1- 19 944 260
- JP-A- S5 479 695
- US-A1- 2016 076 996
- US-B2- 7 253 413

## Beschreibung

Die Erfindung betrifft ein In-situ-Gasmesssystem umfassend eine Gasmessvorrichtung mit einer Infrarot-Photonenquelle (IR-Photonenquelle) und einem IR-Photonendetektor (IR-Photonendetektor).

In Gasreaktoren oder abgeschlossenen Umgebungen, in denen kritische Gaskonzentrationen vorhanden sein können, sind Gasmessungen nötig, um austretende Gase bzw. zu hohe Konzentrationen von schädlichen oder explosiven Gasen zu detektieren. Häufig sind die Umgebungsvariablen in den Gasreaktoren oder in den abgeschlossenen Umgebungen kritisch, d.h. sehr kalt, sehr heiß und/oder hoch reaktiv. Die erforderlichen Gaswarngeräte können daher nicht direkt in diesen kritischen Umgebungen eingesetzt werden. Auch bei unkritischen Temperaturen ist der Aufwand zur sicheren Gasentnahme für die Gasmessung/Gaswarnung sehr hoch.

Es ist bekannt, das Gas mittels von SIL (Sicherheitsintegritätslevel) zugelassenen Pumpen aus der Messumgebung zu entziehen und durch eine ebenfalls SIL zugelassene Filterstufe, in der das Gas von Kondensaten (z. B. Wasser) befreit und ggf. gekühlt wird, durchzuleiten. Das gereinigte und gekühlte Gas kann danach einem Gaswarngerät zugeführt werden. Nachteilig ist jedoch der hohe Installations- und Wartungsaufwand. Weiter erhält man das Ergebnis der Gasmessung mit einer zeitlichen Verzögerung, die bedingt wird durch die Filterung, die zurückgelegte Strecke des Gases in dem Filterabschnitt und die Abkühlung des Gases.

Aus der CN 102 062 726 A ist bekannt, mittels optischer Fasern sichtbares Licht durch Kollimationslinsen durch eine Reaktionskammer zu führen. Dieses Licht wird mit einer weiteren optischen Faser einer Messvorrichtung zugeführt. Die optischen Fasern sind an einer Halterung befestigt, die innerhalb der Reaktionskammer angeordnet ist. Eine solche Anordnung ist für große Gasvolumina nicht geeignet, da die optische Messstrecke durch den Reaktor so lang wäre, dass das gesamte eingespeiste Licht absorbiert werden würde. Weiter ist auch bei dieser Form der Messung der Installations- und Wartungsaufwand sehr hoch, da die Halterung für die optischen Fasern innerhalb der Reaktionskammer angeordnet ist. Zur Installation muss die Halterung aufwändig eingesetzt werden und für die Wartung, die auch eine Reinigung von Ablagerungen der reaktiven Gase umfasst, mit hohem Aufwand ausgebaut werden.

Aufgabe der Erfindung ist es daher, ein In-situ-Gasmesssystem der eingangs genannten Art bereitzustellen, bei dem der Installations- und Wartungsaufwand verringert ist und die Ausgabe der Messwerte zeitnah erfolgt.

Die Aufgabe wird gelöst durch die Merkmale des unabhängigen Anspruchs. Vorteilhafte Weiterbildungen sind Gegenstand der abhängigen Ansprüche.

Bei einem In-situ-Gasmesssystem umfassend eine IR-Photonenquelle und einen IR-Photonendetektor, ist erfindungsgemäß vorgesehen, dass das In-situ-Gasmesssystem einen Gasreaktionsraum, in dem sich wenigstens ein Gas befindet, eine Erweiterungskammer, ein optisches Element und ein Verbindungselement, durch das die Erweiterungskammer lösbar mit dem Gasreaktionsraum verbunden ist, aufweist, wobei das optische Element an der Erweiterungskammer angeordnet ist und wobei die IR-Photonenquelle, das optische Element und der IR-Photonendetektor einen optischen Messpfad definieren, der sich durch die Erweiterungskammer erstreckt, wobei das Verbindungselement eine lösbare, fluidkommunizierende Verbindung der Erweiterungskammer mit dem Gasreaktionsraum derart herstellt, dass die Erweiterungskammer die gleiche Gasatmosphäre wie der Gasreaktionsraum aufweist und mittels einer in der Erweiterungskammer durchgeführten Messung eine Gaszusammensetzung oder Gaskonzentration im Gasreaktionsraum bestimmt wird und das In-situ-Gasmesssystem ein in das Verbindungselement integriertes Verschlusselement aufweist, das zum Blockieren der fluidkommunizierenden Verbindung zwischen der Erweiterungskammer und dem Gasreaktionsraum ausgebildet ist, wobei die Erweiterungskammer bei geschlossenem Verschlusselement vom Verbindungselement trennbar ist.

Nachfolgend werden einige Begriffe näher erläutert.

Unter einem optischen Messpfad wird der Weg der Infrarotstrahlung von der IR-Photonenquelle durch das Gas und das optische Element zum IR-Photonendetektor verstanden. Im IR-Photonendetektor wird die Infrarotstrahlung detektiert.

Unter einem optischen Element wird eine abbildende und/oder fokussierende Optik verstanden. Das optische Element kann beispielsweise als eine Linse, ein Spiegel oder ein Prisma ausgestaltet sein.

Mittels des Verbindungselements zur lösbaren Verbindung der Erweiterungskammer mit einem Gasreaktionsraum, kann die Erweiterungskammer mit einem Gasreaktionsraum lösbar verbunden werden. Da die Erweiterungskammer mittels des Verbindungselements lösbar mit dem Gasreaktionsraum verbunden ist, kann die Erweiterungskammer von dem Gasreaktionsraum getrennt werden. Auf diese Weise kann das Innere des Gasreaktionsraums gereinigt werden, um Verunreinigungen, die durch die heißen, kalten bzw. reaktiven Gase in dem optischen Messpfad entstehen können, zu beseitigen. Dadurch ist der Installations- und Wartungsaufwand der Gasmessvorrichtung gering. Weiter kann die Erweiterungskammer schnell und flexibel ausgetauscht werden, sodass zum Beispiel bei Beschädigungen ohne großen Aufwand entweder ein Austausch der Erweiterungskammer oder eine schnelle Reparatur erfolgen kann. Das Gas in dem Gasreaktionsraum kann durch die Verbindung in die Erweiterungskammer strömen und gelangt dadurch in den optischen Messpfad, der sich von der IR-Photonenquelle über das optische Element an der Erweiterungskammer und dem IR-Photonendetektor erstreckt. Das Gas, das sich in dem optischen Messpfad befindet, kann dann mittels optischer Methoden vermessen werden. Das Gas dann somit in-situ, ungefiltert und ohne Abpumpen gemessen werden, sodass eine zeitliche Verzögerung der Messdaten bei sich zeitlich verändernden Gaskonzentrationen vermieden wird.

Mittels des Verschlusselements kann die Erweiterungskammer bei geschlossenem Verschlusselement von dem Gasreaktionsraum gelöst werden, ohne dass das gesamte Gas im Gasreaktionsraum entfernt werden muss. Auf diese Weise kann ein schneller Austausch der Erweiterungskammer erfolgen.

Aus der DE 199 44 260 A1 ist ein Verfahren und eine Vorrichtung zur quantitativen Gasanalyse einer in einem geschlossenen Probengefäß enthaltenen Probenatmosphäre bekannt. Die Vorrichtung umfasst eine an dem Probengefäß anbringbare Messkammer, die über eine Diffusionsverbindung mit dem Probengefäß in Verbindung steht, sowie zum Durchführen der Gasanalyse eine Sensoreinrichtung mit einer Strahlungsquelle und einer Detektoreinrichtung.

Aus der EP 0 423 488 A2 ist eine Vorrichtung und ein Verfahren zur simultanen Bestimmung der Konzentration einer Komponente in einem Messgas vor und nach dessen Durchgang durch einen konzentrationsverändernden Reaktor bekannt. Dabei wird das Messgas vor und nach dessen Durchgang durch den Reaktor in eine Erweiterungskammer geleitet, in der eine Infrarot-Gasanalyse durchgeführt wird.

Vorteilhafterweise ist die IR-Photonenquelle über einen Wellenleiter mit der Erweiterungskammer verbunden ist, wobei der Wellenleiter einen Teil des optischen Messpfads umfasst. Weiter kann mit Vorteil der IR-Photonendetektor über einen Wellenleiter mit der Erweiterungskammer verbunden sein, wobei der Wellenleiter einen Teil des optischen Messpfads umfasst. Damit können die IR-Photonenquelle und der IR-Photonendetektor räumlich entfernt von der Erweiterungskammer und dem gesamten Gasreaktionsraum angeordnet werden. Die IR-Photonenquelle und der IR-Photonendetektor sind damit vor Vibrationen und hohen oder kalten Temperaturen, die von dem Gasreaktionsraum ausgehen können, geschützt.

Mit Vorteil sind die Wellenleiter Saphir-Wellenleiter. Saphir-Wellenleiter halten sehr hohe Temperaturen aus, und können auf diese Weise an sehr heißen Gasreaktionsräumen angeordnet werden, ohne beschädigt zu werden.

Mit Vorteil ist das optische Element in einem Innenraum der Erweiterungskammer angeordnet. Das optische Element kann im Innenraum ohne großen Aufwand installiert und justiert werden. Damit ist auch die Wartung vereinfacht, wenn das optische Element gereinigt werden muss.

Alternativ oder zusätzlich ist es zweckmäßig, wenn das optische Element in der Wand oder an der Wand der Erweiterungskammer angeordnet ist. Damit ist das optische Element teilweise von den zu vermessenden Gasen abgeschirmt. Der Installations- und Wartungsaufwand wird damit weiter verringert.

Vorteilhafterweise ist ein optisches Element an einem Ende eines Wellenleiters an der Erweiterungskammer angeordnet. Dabei können vorzugsweise zwei optische Elemente vorgesehen sein, die an der Erweiterungskammer angeordnet sind. Das optische Element kann auf diese Weise das Ende des Wellenleiters bilden und damit in den Wellenleiter integriert sein. Der Installationsaufwand ist bei dieser Ausführungsform weiter reduziert.

Dabei kann das optische Element mit Vorteil als Sammellinse, Hohlspiegel oder als Kollimatorlinse ausgebildet sein. Der Fokus ist dabei so gewählt, dass die Infrarotstrahlung in den IR-Photonendetektor geleitet wird.

Vorteilhafterweise weist die Erweiterungskammer ein Erweiterungskammer-Verschlusselement auf. Damit kann die Erweiterungskammer separat verschlossen werden. Insbesondere in Kombination mit einem Verschlusselement an dem Verbindungselement, kann die Erweiterungskammer jederzeit von dem Gasreaktionsraum gelöst und gewartet werden. Weiter kann das Gas, das gemessen wurde in der Erweiterungskammer verbleiben, so dass es für weitere Messungen fernab des Gasreaktionsraums zur Verfügung stehen kann.

Anhand einer vorteilhaften Ausführungsform wird die Erfindung mittels der beigefügten Zeichnung näher erläutert. Es zeigen
- Fig. 1:: eine schematische Darstellung des In-Situ-Gasmesssystems an einem Gasreaktionsraum;
- Fig. 2:: eine schematische Darstellung eines In-situ-Gasmesssystems mit Wellenleitern; und
- Fig. 3a-c:: schematische Darstellungen des Innenraums einer Erweiterungskammer.

Das In-situ-Gasmesssystem wird in seiner Gesamtheit mit dem Bezugszeichen 1 referenziert.

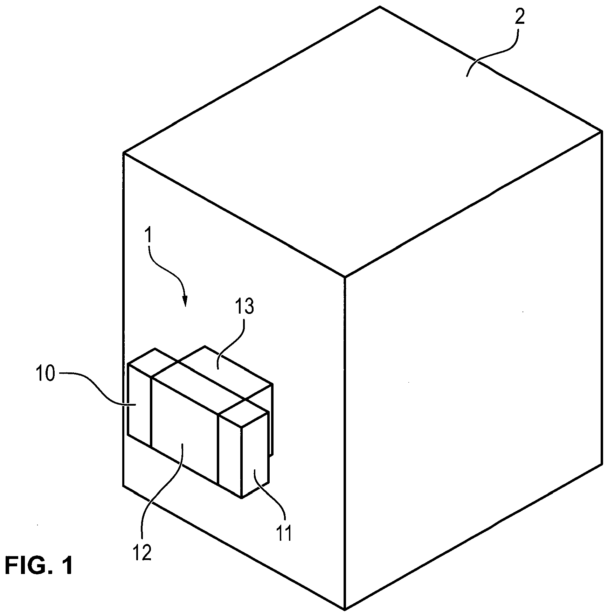

Figur 1 zeigt dabei ein In-situ-Gasmesssystem 1, das an einem Gasreaktionsraum 2 angeordnet ist. Das In-situ-Gasmesssystem 1 umfasst eine Erweiterungskammer 12, die mittels eines Verbindungselements 13 mit dem Gasreaktionsraum 2 lösbar verbunden ist. Weiter umfasst das In-situ-Gasmesssystem 1 eine IR-Photonenquelle 10 und einen IR-Photonendetektor 11. Die IR-Photonenquelle 10 emittiert Infrarotstrahlung in die Erweiterungskammer 12. Der IR-Photonendetektor 11 fängt die emittierte Infrarotstrahlung, die durch die Erweiterungskammer 12 und dem in der Erweiterungskammer 12 befindlichen Gas durchgetreten ist, auf. Die Infrarotstrahlung wird damit von der IR-Photonenquelle 10 durch die Erweiterungskammer 12 zum IR-Photonendetektor 11 transmittiert. Die Erweiterungskammer 12 weist dabei die gleiche Gasatmosphäre wie in dem Gasreaktionsraum 2 auf. Somit kann mittels der Messung direkt die Gaszusammensetzung oder Gaskonzentration im Gasreaktionsraum 2 bestimmt werden.

Die Messung der Gase findet dabei in-situ statt, sodass eine verzögerungsfreie Messung ermöglicht wird. An der Erweiterungskammer 12 ist dabei ein optisches Element 16 vorgesehen, das die von der IR-Photonenquelle 10 emittierte Infrarotstrahlung auf den IR-Photonendetektor 11 fokussiert. Die IR-Photonenquelle 10, das optische Element 16 und der IR-Photonendetektor 11 definieren einen optischen Messpfad durch die Erweiterungskammer 12.

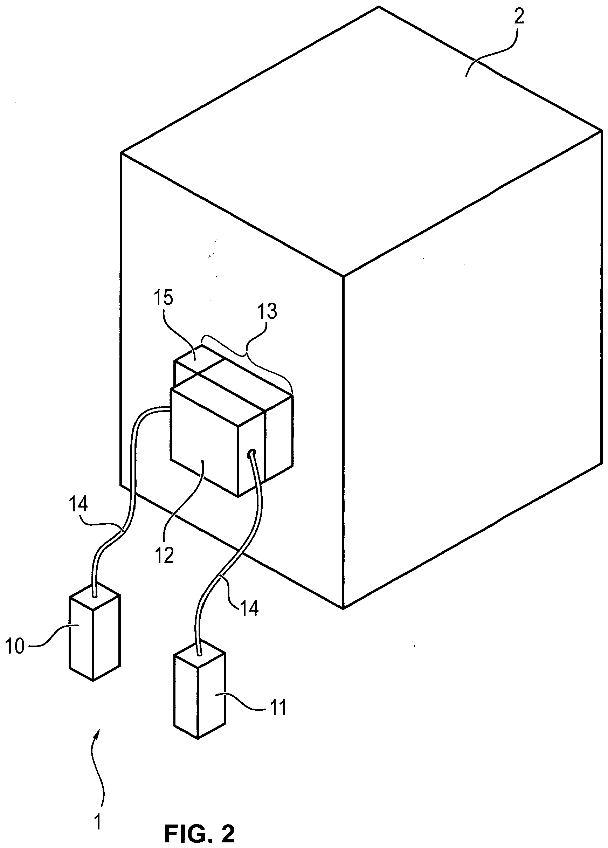

Gemäß Figur 2 können die IR-Photonenquelle und der IR-Photonendetektor 11 über Wellenleiter 14 mit der Erweiterungskammer 12 verbunden sein. Die IR-Photonenquelle 10 übermittelt dabei die Infrarotstrahlung durch einen der Wellenleiter 14 in die Erweiterungskammer 12. Ein weiterer Wellenleiter 14 übermittelt die aus der Erweiterungskammer 12 austretende Infrarotstrahlung an den IR-Photonendetektor 11. Die IR-Photonenquelle 10 und der IR-Photonendetektor 11 können dabei von der Erweiterungskammer 12 und somit auch von dem Gasreaktionsraum 2 beabstandet angeordnet werden. Vibrationen und Temperaturschwankungen bzw. hohe oder tiefe Temperaturen, die von dem Gasreaktionsraum 2 ausgehen, können damit die Messung und die Emission der Photonen nicht beeinflussen. Die IR-Photonenquelle 10 und der IR-Photonendetektor 11 können mittels der Wellenleiter 14 in sicherer Entfernung von dem Gasreaktionsraum 2 angeordnet werden.

Die Wellenleiter 14 sind dabei aus Saphir hergestellt. Durch das Material können die Wellenleiter 14 auch bei Gasreaktionsräumen eingesetzt werden, die hohe Temperaturen abstrahlen. Weiter ist Saphir transmissiv für Infrarotstrahlung.

Die Erweiterungskammer 12 ist weiter lösbar mit dem Verbindungselement 13 verbunden. Das Verbindungselement 13 umfasst dabei ein Verschlusselement 15, das die fluidkommunizierende Verbindung zwischen der Erweiterungskammer 12 und dem Gasreaktionsraum 2 blockieren kann. Auf diese Weise kann die fluidkommunizierende Verbindung zwischen der Erweiterungskammer 12 und dem Gasreaktionsraum 2 gekappt werden, sodass kein Gas mehr von dem Gasreaktionsraum 2 in die Erweiterungskammer 12 gelangt. Die Erweiterungskammer 12 kann bei geschlossenem Verschlusselement 15 von dem Verbindungselement 13 getrennt werden, sodass der Innenraum 120 der Erweiterungskammer 12 gereinigt werden kann. Weiter kann auf diese Weise eine Erweiterungskammer 12 ausgetauscht werden.

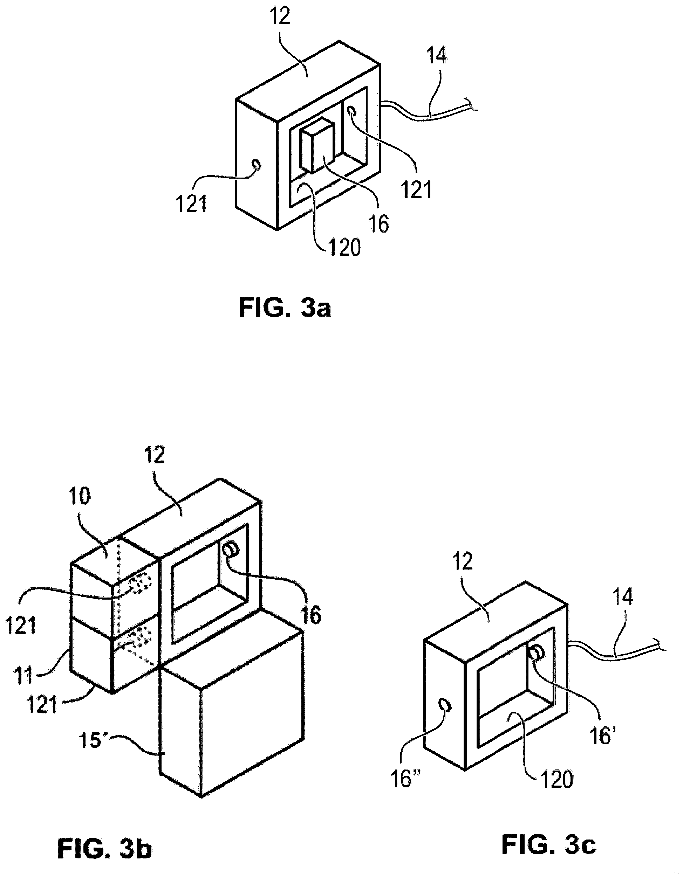

In den Figuren 3a bis 3c ist ein Innenraum 120 einer Erweiterungskammer 12 dargestellt. In einer ersten alternativen Ausführungsform gemäß Figur 3a ist ein optisches Element 16 innerhalb der Erweiterungskammer 12 im Innenraum 120 angeordnet. Die Erweiterungskammer 12 umfasst weiter Öffnungen 121. Die Öffnungen 121 dienen dazu, die Infrarotstrahlung der IR-Photonenquelle 10 in die Erweiterungskammer 12 einzuleiten und dem IR-Photonendetektor 11 das Detektieren der Infrarotstrahlung in der Erweiterungskammer 12 zu ermöglichen. Die Öffnungen 121 dienen damit dazu, die Infrarotstrahlung durch die Erweiterungskammer 12 bzw. durch den Innenraum 120 der Erweiterungskammer 12 durchzuleiten.

Das optische Element 16 ist dabei so angeordnet, dass es die Infrarotstrahlung, die von der IR-Photonenquelle 10 emittiert wird, in die Öffnung 121 fokussiert, die dem IR-Photonendetektor 11 zugeordnet ist. Die Öffnungen 121 können dabei über Wellenleiter 14 mit dem IR-Photonendetektor 11 oder der IR-Photonenquelle 10 verbunden sein. Alternativ können die IR-Photonenquelle 10 und der IR-Photonendetektor 11 direkt hinter den Öffnungen 121 angeordnet sein. In der Alternative gemäß Figur 3a sind der IR-Photonendetektor 11 und die IR-Photonenquelle 10 direkt an der Erweiterungskammer 12 angeordnet. Weiter sind die Öffnungen 121 in der Wand der Erweiterungskammer 12 an gegenüberliegenden Seiten angeordnet. Dadurch wird der Messpfad beginnend an der IR-Photonenquelle 10 durch die eine Öffnung 121, die Erweiterungskammer 12 und das optische Element 16 zur zweiten Öffnung 121 und an dem IR-Photonendetektor 11 endend definiert. In diesem Fall kann das optische Element 16 eine Sammellinse sein.

In einer alternativen Ausführungsform kann das optische Element 16 als Hohlspiegel oder anderes reflektierendes Element ausgebildet sein (vgl. Fig. 3b). In dieser Ausführungsform sind die Öffnungen 121 so angeordnet, dass Infrarotstrahlung, die aus der einen Öffnung 121 auf das optische Element 16 geleitet wird von dem optischen Element 16 in die andere Öffnung 121 geleitet wird. Das optische Element 16 ist dabei als Hohlspiegel ausgebildet. Auch in dieser Ausführungsform können die IR-Photonenquelle 10 und der IR-Photonendetektor 11 direkt an der Erweiterungskammer hinter den Öffnungen 121 angeordnet sein. Alternativ können die IR-Photonenquelle 10 und der IR-Photonendetektor 11 über Wellenleiter 14 mit den Öffnungen 121 verbunden sein.

In dieser Ausführungsform umfasst die Erweiterungskammer 12 ein Erweiterungskammer-Verschlusselement 15'. Damit wird das Lösen der Erweiterungskammer 12 von dem Gasreaktionsraum 2 vereinfacht. Weiter kann in der Erweiterungskammer 12 Gas verbleiben, das zu einem späteren Zeitpunkt an anderer Stelle weiter vermessen werden kann.

In einer weiteren alternativen Ausführungsform gemäß Figur 3c sind ein erstes optisches Element 16' und ein zweites optisches Element 16" vorgesehen. Die optischen Elemente 16', 16" sind dabei in der Wand der Erweiterungskammer 12 angeordnet. Sie können als Kollimatorlinsen ausgebildet sein. Infrarotstrahlung, die von außen durch die optischen Elemente 16', 16" in die Erweiterungskammer 12 eingeleitet wird, durchläuft den Innenraum 120 der Erweiterungskammer 12 als kollimierte Infrarotstrahlung, d.h. mit parallelen verlaufenden Strahlen. Dies hat den Vorteil, dass die Gaszirkulation im Innenraum 120 der Erweiterungskammer 12 nicht durch ein optisches Element 16, das im Innenraum 120 der Erweiterungskammer 12 platziert ist, verändert wird. Die Gaszusammensetzung in der Erweiterungskammer 12 entspricht daher der Gaszusammensetzung in dem Gasreaktionsraum 2. Veränderungen, die durch gestörte Strömungsverhältnisse auftreten können, werden damit vermieden.

Die Erfindung vermeidet damit die Installation von mehrstufigen Pumpen- und Filtereinheiten, die gefiltertes und gekühltes Gas zu den Gaswarngeräten transportieren.

### Bezugszeichenliste

- 1: In-situ-Gasmesssystem
- 10: IR-Photonenquelle
- 11: IR-Photonendetektor
- 12: Erweiterungskammer
- 13: Verbindungselement
- 14: Wellenleiterelement
- 15: Verschlusselement
- 15': Erweiterungskammer-Verschlusselement
- 16, 16', 16": optisches Element
- 120: Innenraum
- 121: Öffnung
- 2: Gasreaktionsraum

## Patentansprüche

1. In-situ-Gasmesssystem umfassend eine IR-Photonenquelle (10) und einen IR-Photonendetektor (11),
wobei das In-situ-Gasmesssystem (1)
- einen Gasreaktionsraum (2), in dem sich wenigstens ein Gas befindet,
- eine Erweiterungskammer (12),
- ein optisches Element (16) und
- ein Verbindungselement (13), durch das die Erweiterungskammer (12) lösbar mit dem Gasreaktionsraum (2) verbunden ist, aufweist,
wobei das optische Element (16) an der Erweiterungskammer (12)angeordnet ist und wobei die IR-Photonenquelle (10), das optische Element (16, 16', 16") und der IR-Photonendetektor (11) einen optischen Messpfad definieren, der sich durch die Erweiterungskammer (12) erstreckt,
wobei das Verbindungselement (13) eine lösbare, fluidkommunizierende Verbindung der Erweiterungskammer (12) mit dem Gasreaktionsraum (2) derart herstellt, dass die Erweiterungskammer (12) die gleiche Gasatmosphäre wie der Gasreaktionsraum (2) aufweist und mittels einer in der Erweiterungskammer (12) durchgeführten Messung eine Gaszusammensetzung oder Gaskonzentration im Gasreaktionsraum bestimmt wird,
**dadurch gekennzeichnet, dass**
das In-situ-Gasmesssystem (1) ein
in das Verbindungselement (13) integriertes Verschlusselement (15) aufweist, das zum Blockieren der fluidkommunizierenden Verbindung zwischen der Erweiterungskammer (12) und dem Gasreaktionsraum (2) ausgebildet ist, wobei die Erweiterungskammer (12) bei
geschlossenem Verschlusselement (15) vom Verbindungselement (13) trennbar ist.

2. In-situ-Gasmesssystem nach Anspruch 1,
**dadurch gekennzeichnet, dass**
die IR-Photonenquelle (10) über einen Wellenleiter (14) mit der Erweiterungskammer (12) verbunden ist,
wobei der Wellenleiter (14) einen Teil des optischen Messpfads umfasst.

3. In-situ-Gasmesssystem nach Anspruch 1 oder 2,
**dadurch gekennzeichnet,**
**dass** der IR-Photonendetektor (11) über einen Wellenleiter (14) mit der Erweiterungskammer (12) verbunden ist,
wobei der Wellenleiter (14) einen Teil des optischen Messpfads umfasst.

4. In-situ-Gasmesssystem nach einem der Ansprüche 2 oder 3,
**dadurch gekennzeichnet,**
**dass** der Wellenleiter (14) ein Saphir-Wellenleiter ist.

5. In-situ-Gasmesssystem nach einem der vorangegangenen Ansprüche,
**dadurch gekennzeichnet,**
**dass** das optische Element (16, 16', 16") in einem Innenraum (120) der Erweiterungskammer (12) angeordnet ist.

6. In-situ-Gasmesssystem nach einem der Ansprüche 1 bis 4,
**dadurch gekennzeichnet,**
**dass** das optische Element (16, 16', 16") in der Wand oder an der Wand der Erweiterungskammer (12) angeordnet ist.

7. In-situ-Gasmesssystem nach Anspruch 6,
**dadurch gekennzeichnet,**
**dass** das optische Element (16, 16', 16'') an einem Ende eines Wellenleiters (14) angeordnet ist, wobei vorzugsweise zwei optische Elemente (16, 16', 16") an der Erweiterungskammer (12) angeordnet sind.

8. In-situ-Gasmesssystem nach einem der vorangegangenen Ansprüche,
**dadurch gekennzeichnet,**
**dass** das optische Element (16, 16', 16") eine Sammellinse, ein Hohlspiegel und/oder eine Kollimatorlinse ist.

9. In-situ-Gasmesssystem nach einem der vorangegangenen Ansprüche,
**dadurch gekennzeichnet,**
**dass** die Erweiterungskammer (12) und das Verbindungselement (13) separat ausgeführt sind.

10. In-situ-Gasmesssystem nach einem der Ansprüche 1 bis 8,
**dadurch gekennzeichnet,**
**dass** die Erweiterungskammer (12) ein Erweiterungskammer-Verschlusselement (15') aufweist.

## Claims

1. An in-situ gas-measuring system comprising an IR photon source (10) and an IR photon detector (11),
wherein the in-situ gas-measuring system (1) has
- a gas reaction space (2), in which there is at least one gas,
- an expansion chamber (12),
- an optical element (16), and
- a connection element (13) through which the expansion chamber (12) is detachably connected to the gas reaction space (2),
wherein the optical element (16) is arranged at the expansion chamber (12), and wherein the IR photon source (10), the optical element (16, 16', 16") and the IR photon detector (11) define an optical measuring path which extends through the expansion chamber (12), wherein the connection element (13) establishes a detachable, fluid-communicating connection of the expansion chamber (12) with the gas reaction space (2) in such a way that the expansion chamber (12) has the same gas atmosphere as the gas reaction space (2), and a gas composition or gas concentration in the gas reaction space is determined by means of a measurement carried out in the expansion chamber (12),
**characterised in that**
the in-situ gas-measuring system (1) has a closing element (15) that is integrated into the connection element (13) and is formed to block the fluid-communicating connection between the expansion chamber (12) and the gas reaction space (2), wherein the expansion chamber (12) can be separated from the connection element (13) when the closing element (15) is closed.

2. An in-situ gas-measuring system according to claim 1,
**characterised in that**
the IR photon source (10) is connected to the expansion chamber (12) by way of a waveguide (14),
wherein the waveguide (14) comprises a portion of the optical measuring path.

3. An in-situ gas-measuring system according to claim 1 or 2,
**characterised in that**
the IR photon detector (11) is connected to the expansion chamber (12) by way of a waveguide (14), wherein the waveguide (14) comprises a portion of the optical measuring path.

4. An in-situ gas-measuring system according to one of claims 2 or 3,
**characterised in that**
the waveguide (14) is a sapphire waveguide.

5. An in-situ gas-measuring system according to one of the preceding claims,
**characterised in that**
the optical element (16, 16', 16") is arranged in an internal space (120) of the expansion chamber (12).

6. An in-situ gas-measuring system according to one of claims 1 to 4,
**characterised in that**
the optical element (16, 16', 16") is arranged in the wall or on the wall of the expansion chamber (12).

7. An in-situ gas-measuring system according to claim 6,
**characterised in that**
the optical element (16, 16', 16") is arranged at one end of a waveguide (14), wherein preferably two optical elements (16, 16', 16") are arranged at the expansion chamber (12).

8. An in-situ gas-measuring system according to one of the preceding claims,
**characterised in that**
the optical element (16, 16', 16") is a convergent lens, a concave mirror and/or a collimator lens.

9. An in-situ gas-measuring system according to one of the preceding claims,
**characterised in that**
the expansion chamber (12) and the connection element (13) are constructed separately.

10. An in-situ gas-measuring system according to one of claims 1 to 8,
**characterised in that** the expansion chamber (12) has an expansion-chamber closing element (15').

## Revendications

1. Système de mesure de gaz in situ comprenant une source de photons IR (10) et un détecteur de photons IR (11),
lequel système de mesure de gaz in situ (1) présente
- un espace de réaction de gaz (2) dans lequel se trouve au moins un gaz,
- une chambre d'extension (12),
- un élément optique (16) et
- un élément de liaison (13) à travers lequel la chambre d'extension (12) est reliée de manière amovible à l'espace de réaction de gaz (2),
dans lequel l'élément optique (16) est disposé sur la chambre d'extension (12) et dans lequel la source de photons IR (10), l'élément optique (16, 16', 16") et le détecteur de photons IR (11) définissent un trajet de mesure optique qui s'étend à travers la chambre d'extension (12),
dans lequel l'élément de liaison (13) établit une liaison de communication fluidique amovible entre la chambre d'extension (12) et l'espace de réaction de gaz (2) de telle sorte que la chambre d'extension (12) présente la même atmosphère gazeuse que l'espace de réaction de gaz (2) et une composition de gaz ou concentration de gaz dans l'espace de réaction de gaz est déterminée au moyen d'une mesure effectuée dans la chambre d'extension (12),
**caractérisé en ce que** le système de mesure de gaz in situ (1) présente un élément de fermeture (15) qui est intégré dans l'élément de liaison (13) et qui est conçu pour bloquer la liaison de communication fluidique entre la chambre d'extension (12) et l'espace de réaction de gaz (2), la chambre d'extension (12) pouvant être séparée de l'élément de liaison (13) lorsque l'élément de fermeture (15) est fermé.

2. Système de mesure de gaz in situ selon la revendication 1,
**caractérisé en ce**
**que** la source de photons IR (10) est reliée à la chambre d'extension (12) par un guide d'ondes (14),
lequel guide d'ondes (14) comprend une partie du trajet de mesure optique.

3. Système de mesure de gaz in situ selon la revendication 1 ou 2,
**caractérisé en ce**
**que** le détecteur de photons IR (11) est relié à la chambre d'extension (12) par l'intermédiaire d'un guide d'ondes (14),
le guide d'ondes (14) comprenant une partie du trajet de mesure optique.

4. Système de mesure de gaz in situ selon l'une des revendications 2 ou 3,
**caractérisé en ce**
**que** le guide d'ondes (14) est un guide d'ondes en saphir.

5. Système de mesure de gaz in situ selon l'une des revendications précédentes,
**caractérisé en ce**
**que** l'élément optique (16, 16', 16") est disposé dans un espace intérieur (120) de la chambre d'extension (12).

6. Système de mesure de gaz in situ selon l'une des revendications 1 à 4,
**caractérisé en ce**
**que** l'élément optique (16, 16', 16") est disposé dans la paroi ou sur la paroi de la chambre d'extension (12).

7. Système de mesure de gaz in situ selon la revendication 6,
**caractérisé en ce**
**que** l'élément optique (16, 16', 16") est disposé à une extrémité d'un guide d'ondes (14), de préférence deux éléments optiques (16, 16', 16") étant disposés sur la chambre d'extension (12).

8. Système de mesure de gaz in situ selon l'une des revendications précédentes,
**caractérisé en ce**
**que** l'élément optique (16, 16', 16") est une lentille convergente, un miroir concave et/ou une lentille collimatrice.

9. Système de mesure de gaz in situ selon l'une des revendications précédentes,
**caractérisé en ce**
**que** la chambre d'extension (12) et l'élément de liaison (13) sont réalisés séparément.

10. Système de mesure de gaz in situ selon l'une des revendications 1 à 8,
**caractérisé en ce**
**que** la chambre d'extension (12) présente un élément de fermeture de chambre d'extension (15').
